# FASCICULE DE BREVET EUROPEEN

(11) **EP 0 897 411 B1**
(45) Date de publication et mention de la délivrance du brevet: **01.10.2003**
(21) Numéro de dépôt: 97923135.4
(22) Date de dépôt: 06.05.1997
(51) Int. Cl.: C08J 9/26, C08J 9/28, A47L 13/16

(54) **PROCEDE DE FABRICATION DE PRODUITS ALVEOLAIRES CELLULOSIQUES**
VERFAHREN ZUR HERSTELLUNG VON GESCHÄUMTEN ZELLSTOFFPRODUKTEN
METHOD FOR MANUFACTURING FOAMED CELLULOSE PRODUCTS

(30) Priorité: 06.05.1996 FR 9605616
(43) Date de publication de la demande: 24.02.1999
(73) Titulaire: FINANCIERE ELYSEES BALZAC, F-75008 Paris (FR)
(72) Inventeur: CHEVALIER, Christophe, F-60000 Beauvais (FR); CHANZY, Henri, F-38700 La Tronche (FR); WERTZ, Jean-Luc, F-60000 Beauvais (FR)
(74) Mandataire: Le Roux, Martine
(86) Numéro de dépôt international: FR9700796
(87) Numéro de publication internationale: WO97042259

(56) Documents cités:
- EP-A- 0 670 344
- GB-A- 1 390 061
- US-A- 4 232 128
- DATABASE WPI Section Ch, Week 8907 Derwent Publications Ltd., London, GB; Class A11, AN 89-047211 XP002024045 & DD 260 187 A (AKAD WISSENSCHAFT DDR) , 21 septembre 1988
- DATABASE WPI Section Ch, Week 8936 Derwent Publications Ltd., London, GB; Class A96, AN 89-259830 XP002024046 & JP 01 188 539 A (ASAHI CHEMICAL IND KK) , 27 juillet 1989
- DATABASE WPI Section Ch, Week 8907 Derwent Publications Ltd., London, GB; Class A11, AN 89-047214 XP002024047 & DD 260 190 A (AKAD WISSENSCHAFT DDR) , 21 septembre 1988

## Description

L'invention présentement revendiquée a pour objet un nouveau procédé de fabrication de produits alvéolaires cellulosiques. Elle concerne également les produits alvéolaires cellulosiques susceptibles d'être obtenus par ledit procédé.

Les produits alvéolaires cellulosiques sont des produits artificiels, du type éponge, toile-éponge; c'est-à-dire consistent en des éponges, des toiles-éponges, des éponges moussées ou analogues. Ces matériaux sont utilisables en eux-mêmes ou intégrés dans la structure d'un combiné, dans le domaine de l'hygiène et de l'entretien, notamment ménager. L'expression toile-éponge désigne un matériau alvéolaire cellulosique qui comporte deux faces sensiblement parallèles et une faible épaisseur, généralement inférieure à un centimètre. Un tel matériau peut comporter dans sa structure une grille de renfort.

A ce jour, lesdits matériaux alvéolaires cellulosiques sont fabriqués par un procédé, dit procédé viscose, bien connu de l'homme du métier, notamment décrit dans le brevet FR-A-812 502. Ce procédé comprend:
- la préparation d'une masse pâteuse à partir notamment
   1) d'une solution cellulosique telle que de la viscose (ladite viscose étant obtenue par action d'une solution alcaline sur la pâte cellulosique de base; action qui transforme ladite pâte cellulosique en alcali-cellulose, laquelle réagit avec du sulfure de carbone, pour former un xanthate de cellulose, lequel est soluble dans l'eau sodée);
   2) de matières fibreuses, comme le coton, le sisal, et le lin, destinées à augmenter la résistance mécanique du produit fini;
   3) de pigments, destinés à imposer la couleur dudit produit fini,
   4) d'agents porophores, comme le sel de Glauber (sulfate de soude décahydraté), matières cristallines solubles et/ou fusibles destinées à former des pores après coagulation de ladite masse pâteuse par lessivage et/ou fusion;
- la mise en forme de cette masse par notamment, moulage ou enduction de part et d'autre ou d'un seul côté d'au moins une grille ou dépôt sur une bande porteuse;
- le chauffage de celle-ci, éventuellement dans un milieu adéquat, pour que s'exerce l'action desdits agents porophores et que soit régénérée la cellulose. Ce chauffage peut être mis en oeuvre soit en faisant passer un courant électrique alternatif entre des électrodes en contact avec la pâte, soit en mettant ladite pâte en contact avec un milieu acide (pH inférieur à 1), à des températures voisines de 70°C, pendant quelques minutes (régénération dite acide, qui fait avantageusement intervenir un mélange d'acide sulfurique et de sulfate de sodium, pour la fabrication de toiles-éponges), soit en mettant ladite pâte en contact avec un milieu basique (pH voisin de 12), à des températures voisines de 100°C, pendant quelques heures (régénération dite basique, qui fait avantageusement intervenir une solution basique de sulfate de sodium, pour la fabrication d'éponges).

Les produits ainsi obtenus - matériaux alvéolaires cellulosiques - sont ensuite, selon le procédé classique, rincés, éventuellement blanchis, séchés, plastifiés avant d'être découpés et emballés.

Ce procédé repose sur une modification chimique de la cellulose de la matière première cellulosique. (Ladite cellulose, tout d'abord transformée en alcali-cellulose, réagit avec le sulfure de carbone, pour donner le xanthate de cellulose solubic dans le milieu). Ladite cellulose modifiée (transformée en l'un de ses dérivés) doit, à l'issue dudit procédé , être régénérée. Cette modification chimique de la cellulose fait intervenir du sulfure de carbone. Ledit sulfure de carbone est per sc polluant. De plus, il est à l'origine de l'apparition de sous-produits également polluants : des sulfures, des polysulfures, des thiosulfates, en solution aqueuse; de l'hydrogène sulfuré sous forme de gaz.

La mise en oeuvre du procédé viscose entraîne donc:
- une pollution des eaux par des composés soufrés réducteurs qui provoquent une forte demande chimique en oxygène (DCO),
- une pollution atmosphérique composée de sulfure de carbone, qui est assimilé à la catégorie des composés organiques volatils (C.O.V.) et d'hydrogène sulfuré qui est malodorant à de très faibles concentrations et génère une gène indiscutable pour le voisinage.

Des recherches ont été menées de longue date pour réduire ou maîtriser ces nuisances. Des travaux d'optimisation et d'amélioration du procédé viscose ont été menés en vue de minimiser la quantité de sulfure de carbone utilisée. Ainsi, dans un domaine voisin, celui de la fabrication de fibres cellulosiques par filature de viscose, les sociétés les plus avancées préparent aujourd'hui la viscose avec environ 28% de sulfure de carbone par rapport à l'alphacellulose mise en oeuvre. Simultanément, des technologies ont été développées pour traiter les rejets. Les technologies les plus sophistiquées permettent aujourd'hui de recycler la totalité des polluants en phase aqueuse et d'éviter tout rejet d'eaux polluées vers le milieu naturel. Les technologies de traitement des gaz permettent de recycler par adsorption sur charbons actifs jusqu'à 70 % du sulfure de carbone utilisé pour la fabrication de la viscose et de convertir par oxydation catalytique les deux tiers des émissions résiduelles en acide sulfurique qui est lui-aussi utilisé dans le procédé. Les rejets atmosphériques peuvent donc aujourd'hui être limités à environ 10 % du sulfure de carbone employé (ces rejets sont constitués pour partie de CS₂ et pour partie d'H₂S). Toutefois les techniques mises en oeuvre pour maîtriser ces problèmes de pollution coûtent cher et mettent en péril la viabilité économique du procédé viscose. C'est pourquoi des recherches ont été menées dès les années 1970 en vue de mettre au point un nouveau procédé de transformation de la cellulose ne présentant pas les mêmes inconvénients pour l'environnement que le procédé viscose.

Les recherches se sont en particulier orientées vers des procédés qui ne mettent pas en oeuvre de modification chimique de la cellulose, qui font intervenir un solvant intrinsèque de la cellulose, qui font donc l'économie de la transformation de la cellulose en l'un de ses dérivés (directement soluble) et de la régénération de ladite cellulose à partir dudit dérivé.

De nombreux solvants ou systèmes solvants de la cellulose ont été découverts ou mis au point et sont maintenant connus:
- des oxydes d'amines comme la N-méthyl morpholine N-oxyde (NMMO),
- des complexes contenant un ion métallique comme la Cadoxen (cadmium/éthylénediamine/soude),
- le diméthylsulfoxyde (DMSO),
- les solutions aqueuses de chlorure de zinc,
- des mélanges à base de solutions aqueuses de chlorure de lithium,
- les solutions aqueuses de soude ou d'autres hydroxydes alcalins.

Les recherches portant sur les applications des solutions de cellulose obtenues se sont, toutefois, jusqu'à ce jour, principalement orientées vers la fabrication de fibres cellulosiques artificielles.

Ainsi, la société Asahi a-t-elle largement étudié l'utilisation de solutions aqueuses de soude (EP-A-0 147 634), notamment pour la production de fibres . Ce solvant présente évidemment l'avantage d'être à la fois peu cher et non toxique. Toutefois :
- les solutions aqueuses de soude ne constituent pas un très bon solvant de la cellulose et il s'avère nécessaire, pour obtenir la dissolution requise, de pré-traiter la matière première cellulosique, de l'activer, par exemple par explosion à la vapeur;
- les solutions de cellulose obtenues demeurent généralement turbides et ont tendance à gélifier. Elles sont donc difficiles à filer.

Seule la production de fibres à partir de solutions de cellulose dans la NMMO est à ce jour parfaitement maîtrisée; notamment par la société Courtaulds qui commercialise des fibres, ainsi produites, sous la marque Tencel®.

Les solvants ou systèmes solvants, autres que ladite NMMO ont donc fait l'objet de développements plus ou moins approfondis qui, en tout état de cause, n'ont pas, à ce jour, débouché sur des applications industrielles. Certains desdits solvants (ou systèmes de solvants) ont dû être rapidement abandonnés en raison du coût et/ou de la toxicité du solvant lui-même.

Au jour d'aujourd'hui, à la connaissance de la Demanderesse, aucune société ne maîtrise donc un procédé industriel de fabrication de produits alvéolaires cellulosiques, basé sur la dissolution directe de la cellulose, dans un solvant intrinsèque de celle-ci. Une telle fabrication présente des exigences particulières, notamment différentes de celles requises pour la fabrication de fibres cellulosiques artificielles. Ainsi, dans la mesure où il n'est pas nécessaire de faire passer la solution cellulosique dans une filière, peut-on a priori être beaucoup moins exigeant sur la qualité et l'homogénéité de ladite solution cellulosique. Par contre, dans la mesure où l'on vise à produire un produit tridimensionnel, d'une structure poreuse particulière , présentant certaines propriétés mécaniques, est-on confronté à de multiples problèmes ...

La structure poreuse des matériaux alvéolaires cellulosiques est en effet particulière, quelque peu complexe, dans la mesure où, pour conférer auxdits matériaux alvéolaires cellulosiques leurs remarquables propriétés d'hydrophilie et d'absorption d'eau, elle présente à la fois une macro- et une microporosité ... La macroporosité - présence de porcs dont la taille est supérieure à 100 µm - permet auxdits matériaux d'absorber de grandes quantités de liquide (jusqu'à 30 fois leur propre poids sec). La microporosité - présence de pores dont la taille est inférieure à 10 µm - joue plusieurs rôles :
. elle permet la pénétration de liquide dans la structure pour mouiller très rapidement le matériau lorsque celui-ci est sec;
. elle assure la circulation du liquide entre les macropores, permettant ainsi de remplir et de vider lesdits macropores;
. elle fait office de clapet d'étanchéité entre les macropores, ce qui permet de retenir le liquide dans ceux-ci tant que le matériau n'est pas comprimé et d'utiliser ainsi celui-ci pour transporter ledit liquide.

Une telle structure poreuse résulte, dans le procédé de viscose, de l'action spécifique des agents porophores, comme le sel de Glauber. Celui-ci, en fondant, crée une macroporosité, de dimensions égales à celles des cristaux introduits. Il joue aussi un rôle d'agent coagulant de la viscose, pour former un gel de xanthate de cellulose gonflé par la soude. La structure de ce gel préfigure la structure microporeuse des produits finis. Le départ du sulfure de carbone, sous forme gazeuse, au moment de la régénération de la cellulose, achève le travail de formation de la structure microporeuse en assurant l'ouverture du réseau poreux.

La Demanderesse s'est donc attachée à mettre au point un procédé non polluant (qui ne fait pas intervenir de réactif tel CS₂ pour transformer la cellulose en l'un de ses dérivés) qui conduit à des produits alvéolaires cellulosiques, présentant des propriétés tout à fait similaires à celles des produits alvéolaires cellulosiques de l'art antérieur, obtenus par le procédé viscose.

Ledit procédé constitue le premier objet de l'invention présentement revendiquée.

De façon caractéristique, ledit procédé comprend:
- la dissolution au moins partielle de cellulose (d'une matière première cellulosique) dans un solvant intrinsèque de la cellulose;
- l'incorporation, avec agitation, dans le mélange résultant, d'une quantité efficace d'au moins un agent porophore; le(s)dit(s) agent(s) porophore(s), compatible(s) avec le mélange cellulosique, convenant pour générer, lorsqu'il(s) développe(nt) son (leur) action, une macro- et une microporosité;
- la gélification de la masse pâteuse homogène ainsi obtenue;
- le traitement de ladite masse gélifiée dans des conditions où la cellulose dissoute précipite et l'action de l'(des) agent(s) porophore(s) présent(s) se développe.

On donne ci-après des détails sur chacune des étapes ci-dessus. On en décrit plus précisément des modes de réalisation avantageux.

Dans le cadre du procédé de l'invention, comme il n'est pas nécessaire d'obtenir une dissolution totale de la matière première cellulosique intervenant (le mélange : matière première cellulosique/solvant pouvant consister en une solution mais consistant généralement en une suspension), la nature de ladite matière première cellulosique n'est pas particulièrement critique. Ladite matière première cellulosique renferme, pour la mise en oeuvre industrielle du procédé, de la cellulose dont la structure cristalline est de type cellulose I et/ou cellulose II . Le taux de cristallinité est indifférent. Avantageusement, ladite matière première cellulosique renferme de la cellulose dont le degré de polymérisation moyen, évalué par la mesure de la viscosité d'une solution de ladite matière première cellulosique dans la cupriéthylènediamine, est supérieur à 100 ; de façon encore plus avantageuse, ledit degré de polymérisation est compris entre 200 et 1 000. Si le degré de polymérisation de la cellulose intervenant est inférieur à 200, on peut rencontrer des difficultés pour obtenir des produits finaux de qualité; si ledit degré de polymérisation de la cellulose intervenant est supérieur à 1000, on peut rencontrer des difficultés pour dissoudre une quantité suffisante de ladite cellulose.

A titre d'exemples de matières cellulosiques convenant comme matières premières cellulosiques aux fins de la mise en oeuvre du procédé de l'invention, on peut citer :
- la pâte de bois : pâte de bois papetière ou pâte de bois à dissoudre;
- le papier recyclé;
- les linters de coton;
- les fibres cellulosiques naturelles telles celles de coton, lin, chanvre, jute, ramie;
- la cellulose de déchets végétaux et notamment celle extraite du parenchyme de la pulpe de certains végétaux (comme les betteraves et les agrumes) ou celle extraite de pailles de céréales (comme le blé, l'orge, le seigle, le riz);
- la cellulose ayant déjà subi une transformation (cellulose II) et notamment celle de fibres cellulosiques artificielles (comme les fibres de viscose, de Fibranne®, de Tencel®) ou d'articles en cellulose régénérée (tels des boyaux cellulosiques, films de Cellophane®, éponges). La mise en oeuvre du procédé de l'invention avec ce type de produits assure un recyclage desdits produits.

La matière première cellulosique peut être utilisée, pour la mise en oeuvre du procédé de l'invention, en l'état ou après avoir subi un traitement préalable, visant à rendre la structure cristalline supramoléculaire de la cellulose plus facilement accessible au solvant, visant à faciliter sa dissolution dans ledit solvant.

Un tel traitement préalable se révèle tout-à-fait superflu avec certains couples matière première cellulosique/solvant et de manière quasi générale lorsque la NMMO est utilisée à titre de solvant ou avec les celluloses possédant la structure cristalline de la cellulose II ou les celluloses extraites du parenchyme de la pulpe de certains végétaux (comme les betteraves, les agrumes ...) . Un tel traitement préalable peut par contrc, se révéler indispensable ou très avantageux avec d'autres couples matière première cellulosique/solvant et d'une manière quasi générale lorsque des solutions aqueuses de soude sont utilisées à titre de solvant avec la plupart des celluloses possédant la structure cristalline de la cellulose I et notamment les pâtes de bois, les linters de coton ou les fibres cellulosiques naturelles.

L'homme du métier saura apprécier l'opportunité de la mise en oeuvre d'un tel traitement préalable (pour atteindre un taux de dissolution satisfaisant sans toutefois porter un préjudice conséquent aux propriétés mécaniques du produit final) et saura maîtriser une telle mise en oeuvre. En effet, dans d'autres contextes, on a décrit de tels traitement de la matière première cellulosique. Lesdits traitements sont qualifiés de traitement d'activation. Ils peuvent notamment être mis en oeuvre selon l'une ou l'autre des techniques ci-après :

### a) Explosion à la vapeur

Ce procédé d'activation a été décrit, en particulier, par la société Asahi dans la demande de brevet EP-A-0 147 634. Il consiste à :
- imprégner la cellulose par un agent facilitant la rupture des liaisons hydrogènes intra-moléculaires (par exemple : par de l'eau, par une solution aqueuse d'un sel, par une solution aqueuse d'acide, par une solution aqueuse basique ...) dans une proportion de 10 % à 1 000 % en masse par rapport à la cellulose sèche,
- porter l'ensemble à une température comprise entre 100°C et 350°C sous une pression comprise entre 10 et 250 atm (entre environ 10⁶ et 25.10⁶ Pa) (la pression choisie peut, par exemple, correspondre à la pression de vapeur saturante de l'eau à la température considérée) pendant une durée de 20 secondes à 20 minutes,
- détendre brutalement l'ensemble par mise à la pression atmosphérique et à la température ambiante.

### b) Microfibrillation

Ce procédé d'activation est fondé sur les techniques de raffinage de la cellulose employées dans le domaine du papier. Il consiste à :
- mélanger la matière première cellulosique avec de l'eau ou avec une solution de soude faiblement concentrée (moins de 5 % en masse) afin d'obtenir une pulpe comportant 0,1 % à 5 % de cellulose sèche,
- triturer la pulpe dans un homogénéisateur de type Gaulin pendant une durée de 1 à 24 heures.

Lesdits traitements d'activation, comme indiqué ci-dessus, facilitent la dissolution de la cellulose dans le solvant. Au niveau de la structure de ladite cellulose, ils sont responsables d'une diminution de la longueur et du diamètre des fibres et d'une réduction du degré de polymérisation moyen. Ils influent donc sur les propriétés mécaniques du produit final.

Comme déjà précisé ci-dessus, l'homme du métier saura apprécier l'opportunité de leur mise en oeuvre sachant que, dans le cadre du procédé de l'invention, on ne vise généralement pas une dissolution totale de la matière première cellulosique dans le solvant. On ne vise généralement pas la préparation d'une parfaite solution ... bien qu'une telle préparation ne soit pas exclue du cadre de l'invention. A l'issue de la première étape principale du procédé de l'invention, on obtient généralement un mélange (une suspension) matière première cellulosique/solvant; ladite matière première cellulosique se trouvant, en partie seulement, dissoute dans ledit solvant. Un tel mélange est généralement utilisé, tel que, dans la suite du procédé de l'invention, sans séparation de la fraction dissoute et de la fraction non dissoute. On cherche généralement à dissoudre au moins 30% en masse de la matière première cellulosique introduite dans le solvant, avantageusement au moins 50 % en masse; ladite matière première cellulosique ayant été généralement introduite à raison de 3% à 15% en masse par rapport à la masse de solvant.

Dans le cadre de la description de cette première étape de dissolution du procédé de l'invention, on a déjà précisé ci-dessus la nature de la matière première cellulosique susceptible d'être utilisée (on note ici, à toutes fins utiles, que des mélanges de matériaux de différents types peuvent évidemment convenir) et indiqué le taux de dissolution avantageusement requis. On se propose ci-après de foumir quelques informations sur les solvants convenant aux fins de l'invention.

Tous les composés chimiques connus comme solvants de la cellulose peuvent a priori être utilisés dans le procédé de l'invention. On comprendra toutefois qu'une sélection s'opère rapidement au vu de leur coût, de leur toxicité, des conditions opératoires dans lesquelles ils sont solvants de la cellulose, de leur coût d'utilisation ...

Au jour d'aujourd'hui, la Demanderesse utilise avantageusement des solutions aqueuses de base(s) forte(s) alcaline(s) et de façon encore plus avantageuse des solutions aqueuses de soude. Elle préconise, pour la mise en oeuvre de telles variantes avantageuses du procédé de l'invention, l'utilisation desdites bases fortes alcalines, en solution aqueuse, à une concentration comprise entre 5 % et 12 % en masse. Elle préconise plus précisément l'utilisation de solutions aqueuses d'hydroxyde de lithium ayant une concentration comprise entre 5 % et 8 % et l'utilisation de solutions aqueuses de soude ayant une concentration comprise entre 7 % et 10 % en masse.

De telles solutions aqueuses de soude sont connues pour être des solvants de la cellulose dans des conditions données de température : entre environ - 15°C et + 10°C. La littérature renferme de nombreuses données sur les systèmes tertiaires: Cellulose - Soude - Eau. On peut notamment se référer à : Z. physikal. Chem. Abt B Bd. 43, Heft 5, pp 309-328 : "Das System Cellulose-Natriumhydroxyd-Wasser in Abhàngigkeit von der Temperature"

Selon l'invention, on met en oeuvre la dissolution, dans de telles solutions, entre - 15°C et + 10°C, et préférentiellement entre - 10°C et 0°C.

On décrit ci-après en détail, à titre illustratif, une mise en oeuvre préférée de la première étape de dissolution du procédé de l'invention :
- on prépare une solution aqueuse de soude contenant, en masse, de 7 à 10 % de soude, préférentiellement de 8 à 9 %;
- la matière première cellulosique, est de préférence, broyée grossièrement au moyen d'un déchiqueteur ;
- la matière première cellulosique peut être incorporée dans la solution aqueuse de soude préalablement refroidie ou être incorporée dans la solution aqueuse de soude à température ambiante. Dans ce demier cas - variante préférée - , l'ensemble sera ensuite refroidi ;
- on réalise la dissolution à une température comprise entre -10°C et 0°C;
- on introduit dans le solvant entre 3 % et 15 %, avantageusement entre 5 et 9 %, en masse de matière première cellulosique par rapport à la masse de solution aqueuse de soude;
- le mélange de cellulose et de solution aqueuse de soude est maintenu sous agitation à la température préconisée pendant une durée de 30 min à 8 heures;
- l'agitation est réalisée par un agitateur vertical à hélice. Toutefois, pour les concentrations en cellulose supérieures à 7 %, on utilise préférentiellement un malaxeur adapté aux mélanges à haute viscosité, comme, par exemple, un malaxeur à bras en Z.

On obtient par cette procédure un mélange cellulosique qui comporte une fraction de cellulose dissoutc dans la solution aqueuse de soude et une fraction de cellulose non dissoute. Ledit mélange est utilisé, sans séparation de la fraction non dissoute de la fraction dissoute, dans la suite du procédé.

(Le taux de solubilité de la cellulose peut être mesuré de la manière suivante:
- on dilue la solution cellulosique par une solution aqueuse de soude de même concentration que celle employée pour dissoudre la cellulose; cette dilution est réalisée à la température ambiante. La dilution permet de ramener la concentration en cellulose à 1 % environ ;
- la solution obtenue est centrifugée à 10 000 t/min pendant 5 min;
- on sépare alors la solution surnageante, qui contient la fraction dissoute de la cellulose et le culot qui contient la fraction non dissoute de la cellulose.)

De manière générale, il est toujours possible de faire intervenir dans le mélange (plus ou moins visqueux) : matière première cellulosique/solvant, des additifs aptes à faciliter la dissolution de la cellulose. On peut ainsi ajouter avantageusement à la solution aqueuse de soude utilisée à titre de solvant de 0,5 % à 5 % en masse d'oxyde de zinc.

L'homme du métier saura, à partir de ses connaissances et des informations données ci-dessus, optimiser la nature et les quantités d'intervention respectives de la matière première cellulosique et du solvant associés, pour l'obtention d'un mélange (solution ou suspension) dans lequel vont, de façon caractéristique, être amenés à réagir des agents porophores.

La Demanderesse est parvenue, de façon nullement évidente, à maîtriser l'intervention de tels agents porophores au sein de mélanges cellulosiques, différents de la viscose, au sein desquels aucun dégagement de CS₂ n'est évidemment prévu ...

L'intervention des agents porophores constitue la seconde étape principale du procédé de l'invention. Lesdits agents porophores sont ajoutés dans le mélange matière première cellulosique/solvant, avec agitation, de façon à générer une masse pâteuse homogène. Comme cela sera précisé ci-après, d'autres ingrédients peuvent également intervenir dans la composition de ladite masse pâteuse.

Lesdits agents porophores sont destinés, comme déjà précisé, à créer la structure poreuse particulière du produit fini, structure poreuse qui confère audit produit ses propriétés d'hydrophilie et d'absorption de liquide (eau ...).

Les agents porophores intervenants doivent donc convenir pour générer macro- et microporosité au sein de la structure des produits finis (lors de la précipitation de la cellulose dissoute). Ils doivent par ailleurs, de toute évidence, être compatibles avec le mélange cellulosique dans lequel ils sont ajoutés : ils doivent pouvoir être ajoutés audit mélange, en quantité efficace, sans provoquer de coagulation ou précipitation conséquente de la cellulose dissoute.

On préconise, pour la mise en oeuvre du procédé de l'invention, l'intervention d'au moins un type d'agent porophore et généralement l'intervention de plusieurs types d'agents porophores. Dans cette seconde hypothèse, on associe généralement à un agent porophore dit porophore principal, responsable principalement de la macroporosité, au moins un agent porophore dit porophore auxiliaire, responsable principalement de la microporosité.

Il n'est toutefois nullement exclu de faire intervenir un seul type d'agent porophore ou une formulation d'agents porophores d'un type différent de celui précisé ci-dessus.

Des formulations d'agents porophores convenant aux fins de l'invention peuvent notamment comprendre:
- des solides susceptibles de fondre, de se sublimer ou de se dissoudre,
- des solides ou liquides susceptibles de dégager un gaz,
- des polyélectrolytes anioniques ou cationiques susceptibles de provoquer une démixtion,
- des agents de gonflement susceptibles de provoquer un moussage.

L'action des agents porophores est bien évidemment dépendante de leur nature, de leur conditions de mise en oeuvre et des conditions ultérieures du procédé.

On préconise notamment, lors de la mise en oeuvre du procédé de l'invention, l'intervention, à titre d'agents porophores :
a) d'au moins un solide, sous la forme de particules d'une granulométrie comprise entre 10 µm et 50 mm, et avantageusement entre 100 µm et 15 mm; solide actif par fusion, sublimation, dissolution ou décomposition chimique. La quantité de ce type d'agent à mettre en oeuvre doit être calculée sur la base de la quantité totale de cellulose contenue dans le mélange cellulosique (cellulose dissoute et non dissoute). Pour 1 partie en masse de cellulose, on ajoute généralement de 10 à 100 parties en masse de solide porophore, préférentiellement de 20 à 80 parties. A titre d'exemples de tels agents, on peut citer la glace et des sels hydratés, fusibles à une température inférieure à 90°C, comme par exemple, le sel de Glauber (sulfate de sodium décahydraté : Na₂SO₄, 10H₂O) ou le phosphate trisodique dodécahydraté (Na₃PO₄, 12H₂O);
b) d'au moins un composé choisi parmi :
   + les solides, solubles dans le mélange cellulosique ou non solubles dans celui-ci et présentant alors une granulométrie inférieure à 100 µm, et les liquides, susceptibles de libérer un gaz au cours des étapes ultérieures du procédé, sous l'effet d'une élévation de température ou sous l'action d'un agent chimique (acide, par exemple). La quantité de ce type d'agent à mettre en oeuvre doit être calculée en fonction du volume de gaz produit rapporté à la quantité de cellulose mise en oeuvre. Pour 100 grammes de cellulose, on utilise généralement de 0,1 mole à 10 moles d'agent porophore de ce type ;
   + les polyélectrolytes anioniques ou cationiques, susceptibles de provoquer une démixtion du mélange cellulosique dès leur incorporation ou au cours d'étapes ultérieures du procédé, sous l'effet de variations de la température. On veillera à utiliser ce type d'agents, sous une forme neutralisée, car les formes acides sont incompatibles avec les mélanges cellulosiques. Ce type d'agent est généralement préparé sous forme de solutions, notamment aqueuses, miscibles avec le mélange cellulosique. La quantité de ce type d'agent à mettre en oeuvre doit être calculée par rapport à la quantité de solution cellulosique employée. Elle dépend toutefois beaucoup des caractéristiques propres au polyélectrolyte, en particulier de la longueur de la chaîne et de la nature et du nombre des charges ioniques. On met généralement en oeuvre entre 0,05 *%* et 20 % (% en masse) d'agent porophore de ce type par rapport au mélange cellulosique;
   + les agents de gonflement susceptibles de provoquer un léger moussage du mélange cellulosique; soit en agissant seul, soit en association avec un autre agent porophore. Cette catégorie regroupe, en particulier, les surfactants anioniques, cationiques ou non ioniques, les polyols et les produits comportant une fonction amide. Ce type d'agent est généralement préparé sous forme de solutions, notamment aqueuses, miscibles avec le mélange cellulosique. La quantité de ce type d'agents à mettre en oeuvre dans le cadre du procédé de l'invention est à déterminer en fonction de l'effet de gonflement souhaité. Il est difficile de l'indiquer de manière générale. Il faut que l'incorporation de ce type d'agent porophore dans la solution cellulosique provoque une légère augmentation du volume sans toutefois former une mousse fortement expansée.

Les types d'agents porophores listés ci-dessus sont particulièrement efficaces lorsqu'ils sont employées avec des mélanges cellulosiques : matière première cellulosique/solutions aqueuses de soude.

La Demanderesse a notamment obtenu des résultats très satisfaisants avec de tels mélanges et certains solides du type a) ci-dessus (solides capables de générer une macroporosité et également une microporosité dans la mesure où ils sont légèrement solubles dans la solution cellulosique et y amorce une coagulation de la cellulose), avec de tels mélanges et des formulations renfermant des solides du type a) ci-dessus et au moins un composé du type b) ci-dessus.

A l'issue des deux premières étapes principales du procédé de l'invention, on obtient donc une masse pâteuse homogène à base de la matière première cellulosique (au moins partiellement dissoute), du solvant et de l'(des) agent(s) porophore(s). Comme indiqué précédemment, cette masse pâteuse peut renfermer d'autres ingrédients. En effet, selon une variante de mise en oeuvre préférée, le procédé de l'invention comprend aussi, dans ses premières phases, l'incorporation dans le mélange matière première cellulosique/solvant et/ou dans la masse pâteuse matière première cellulosique/solvant/agent(s) porophore(s) de fibres de renfort et/ou d'additifs.

Les fibres de renfort interviennent avantageusement, comme dans le procédé viscose, pour améliorer les propriétés mécaniques du produit fini. Il peut s'agir de fibres de toute nature :
- fibres naturelles : pâte de bois, coton, lin, ramie, sisal, chanvre, jute, fibres extraites de déchets végétaux comme la paille ...
- fibres artificielles : viscose, rayonne, Tencel®, acétate de cellulose ...
- fibres synthétiques : polyester, polyamide, polypropylène, ...

Lesdites fibres de renfort ont généralement une longueur comprise entre 0,5 et 50 mm, avantageusement entre 1 et 20 mm.

Lesdites fibres de renfort, lorsqu'elles interviennent, sont avantageusement ajoutées au mélange : matière première cellulosique/solvant, avant l'incorporation de l'(des) agent(s) porophore(s) de sorte qu'une bonne liaison soit assurée entre lesdites fibres de renfort et la cellulose dissoute, appelée à être précipitée ultérieurement.

On rappelle que l'intervention de telles fibres de renfort n'est qu'une éventualité. Une telle intervention peut se révéler totalement superflue si le mélange matière première cellulosique/solvant renferme déjà, outre la cellulose dissoute, une quantité suffisante de fibres non dissoutes; si ledit mélange renferme déjà des fibres de renfort, amenées avec ladite matière première cellulosique ...

D'autres additifs peuvent intervenir opportunément, et notamment des additifs qui, sans jouer de rôle particulier dans la formation de la structure du produit fini, confèrent à ladite structure des propriétés particulières.

On peut, par exemple, lors de la mise en oeuvre du procédé de l'invention, incorporer au mélange cellulosique (ou à la masse pâteuse cellulosique) :
- des pigments pour colorer le produit fini (matériau alvéolaire cellulosique : éponge, par exemple);
- des bactéricides ou des fongicides pour protéger ledit produit fini contre l'attaque des micro-organismes au cours de son stockage ou au cours de son utilisation;
- des composés destinés à protéger ledit produit fini contre la dégradation provoquée par les détergents, les lessives et, en particulier, contre la dégradation oxydante amorcée par les solutions d'hypochlorite de sodium;
- des additifs destinés à empêcher l'adhésion sur ou dans ledit produit fini de poussières, de salissures et de détritus divers, pouvant entrer en contact dudit produit au cours de son usage;
- des produits destinés à conférer audit produit fini une plus grande souplesse à l'état humide et/ou à l'état sec et, en particulier, à empêcher le durcissement de celui-ci lorsqu'il sèche ou lorsqu'il est stocké de manière prolongée hors de l'eau,
- des composés conférant audit produit fini, une plus grande solidité, et notamment une résistance accrue à la rupture en traction ou en torsion et/ou une résistance accrue à l'abrasion.

On a vu précédemment que des composés chimiques peuvent également être ajoutés pour faciliter la dissolution de la cellulose.

A l'issue des deux premières étapes principales - dissolution au moins partielle de la matière première cellulosique dans le solvant, ajout au mélange obtenu de porophore(s) - du procédé de l'invention, on obtient donc une pâte ou masse pâteuse qui est constituée :
- du mélange : matière première cellulosique/solvant (ledit mélange pouvant consister en une solution mais consistant généralement en une suspension );
- de l'agent ou des agents porophores;
- éventuellement de fibres de renfort;
- éventuellement d'additifs.

Cette pâte est préparée, par mélange, avec agitation, des ingrédients la constituant. Elle se doit d'être homogène pour conduire à un produit final de structure homogène.

Ladite pâte, homogène, est alors généralement mise en forme, selon différents procédés, connus en eux-mêmes, en fonction de la présentation recherchée pour le produit alvéolaire cellulosique final.

Ladite pâte peut notamment:
- être versée ou injectée dans un moule, avec ou sans action de compression,
- être extiudée au travers d'une filière,
- être déposée sur un support, comme une toile ou une grille, soit par bambanage, soit par enduction au moyen de rouleaux, soit par tout autre procédé.

Selon l'invention, de façon caractéristique, la pâte renfermant le solvant, la cellulose de la matière première cellulosique dissoute, éventuellement la cellulose de la matière première cellulosique non dissoute, l'(les) agent(s) porophore(s) et éventuellement au moins un additif est gélifiée. Elle n'est pas, à l'issue de sa préparation, directement traitée pour obtenir la précipitation, avec action conjointe des agents porophores, de la cellulose dissoute. Elle est, préalablement à un tel traitement, soumise à une espèce de mûrissement qui s'est révélée une étape indispensable pour l'obtention du produit final aux propriétés requises. Cette étape de gélification constitue un point clé du procédé de l'invention. Elle a généralement lieu, comme précisé ci-dessus, après une étape de mise en forme de ladite pâte.

Il est connu que les solutions de cellulose présentent cette propriété de gélifier au stockage. On a vu que ceci posait problème pour leur filature ... La gélification se caractérise par une augmentation de la viscosité des solutions jusqu'à obtenir un gel qui présente, au moins dans le domaine des petites contraintes et petites déformations, les propriétés d'un solide élastique; c'est-à-dire que, lorsqu'il est soumis à de telles contraintes (ou déformations), ledit gel ne flue pas et retrouve sa forme initiale lorsque ladite contrainte est relâchée. Ladite gélification résulte d'une organisation de la cellulose dissoute en une structure gonflée par le solvant.

Une telle gélification peut être obtenue, dans des conditions de cinétique intéressantes, en abaissant ou en augmentant la température de la solution cellulosique et/ou en ajoutant à celle-ci des additifs adéquats. De tels additifs peuvent notamment consister en des sels ou composés connus pour leurs propriétés gélifiantes. A titre d'exemples de sels convenant à cette fin, on peut citer les sels métalliques comme les sels de lithium, de sodium, de potassium, de magnésium, de calcium, d'aluminium, de manganèse, de fer, de cobalt, de nickel, de cuivre ou de zinc. Le sel choisi peut être employé sous forme de solution aqueuse ou sous forme cristallisée. La quantité à utiliser, la température et la durée de gélification dépendent évidemment du sel employé et aussi des propriétés que l'on souhaite donner au gel.

Dans le cadre de la mise en oeuvre du procédé de l'invention, on a mis en évidence l'intérêt de ce phénomène de gélification; quelque peu modifié, voire perturbé par la présence des agents porophores. On a par ailleurs optimisé sa mise en oeuvre qui influe sur la microporosité et les propriétés mécaniques du produit final.

Dans l'hypothèse de l'utilisation de solutions aqueuses de base forte alcaline et notamment de soude à titre de solvant, on préconise de mettre en oeuvre ladite gélification à une température comprise entre - 30°C et + 90°C pendant une durée de 1 heure à 400 heures. Selon trois modes de réalisation avantageux de ladite gélification, on procède de la manière suivante :
- à température ambiante, si la masse pâteuse renferme des produits propres à la faire gélifier, dans des délais raisonnables. Lesdits produits peuvent notamment consister en des agents porophores du type sels qui se dissolvent en partie dans ladite masse pour provoquer sa gélification, pour amorcer sa coagulation, et/ou en des agents gélifiants de type connu (dérivés de la cellulose, xanthane, amidon ...);
- par abaissement de la température à une température inférieure à - 8°C. On note que le gel formé lorsqu'on élève la température au dessus de -8°C, demeure stable. Dans le cadre de cette variante, on opère avantageusement de la manière suivante : la masse pâteuse est refroidie lentement jusqu'à environ - 15°C et elle est ensuite ramenéc à la température ambiante ;
- par élévation de la température à une température supérieure à + 30°C. La température choisie doit demeurer inférieure à la température susceptible de provoquer l'action des agents porophores du type solide de grosse granulométrie et ne doit pas, en tout état de cause provoquer une dépolymérisation de la cellulose dissoute. On note que le gel ainsi formé est stable et le demeure même si l'on rabaisse la température en dessous de + 30°C.

D'une manière générale, l'homme du métier saura optimiser la mise en oeuvre de cette étape de gélification, notamment en fonction de la nature du solvant et des agents porophores intervenants. Il s'inspirera avantageusement des techniques de gélification mises en oeuvre dans les procédés de fabrication de membranes d'ultrafiltration.

La gélification de solutions cellulosiques ne constitue pas per se un procédé innovant, comme cela a été vu précédemment. L'intérêt de la misé en oeuvre d'une gélification "analogue" sur des solutions cellulosiques chargées en agents porophores, dans le cadre de la préparation de matériaux alvéolaires cellulosiques, n'était toutefois nullement évident.

La dernière étape principale du procédé de l'invention consiste à traiter la masse pâteuse gélifiée dans le but :
- d'une part, de précipiter la majeure partie voire la totalité de la cellulose dissoute dans le solvant;
et
- d'autre part, de faire agir l'(les) agent(s) porophore(s) pour créer la structure finale du produit alvéolaire cellulosique recherché.

Ladite dernière étape (mise en oeuvre sur la masse pâteuse gélifiée à la température ambiante) comprend généralement plusieurs étapes successives ou simultanées dont une propre à occasionner voire à parfaire la précipitation de la cellulose . Ainsi ladite dernière étape, lorsque le solvant intervenant consiste en de la NMMO, englobe-t-elle l'addition d'eau. De la même façon, lorsque le solvant intervenant consiste en une solution aqueuse d'au moins une base forte alcaline (avantageusement une solution aqueuse de soude), ladite demière étape peut comprendre l'immersion de la masse pâteuse gélifiée, obtenue à l'issue des étapes précédentes, dans un acide. Il s'agit, au cours de ladite immersion, de neutraliser ledit solvant intervenant. A cette fin, on peut utiliser soit un acide minéral, tel que l'acide chlorhydrique, l'acide hypochloreux, l'acide sulfurique, l'acide nitrique, l'acide phosphorique, l'acide hypophosphoreux, l'acide fluorique, l'acide bromique, soit un acide organique tel que l'acide formique, l'acide acétique, l'acide citrique ou l'acide oxalique.Avantageusement, on utilise un acide fort, à une concentration de 10 à 100 g/l, à une température comprise entre + 10°C et + 100°C, pendant une durée de 5 minutes à 8 heures. De façon particulièrement préférée, on utilise de l'acide sulfurique. La température n'est pas particulièrement critique, sauf dans le cas où cette acidification doit simultanément provoquer la fusion d'agent(s) porophore(s). Dans ce cas, la température de traitement doit être supérieure à la température de fusion dudit(desdits) agent(s). Ladite acidification peut également provoquer la décomposition de certains types d'agent porophore, notamment ceux qui se décomposent sous l'action d'un acide en formant un gaz, par exemple les carbonates.

Préalablement ou parallèlement à une telle étape décisive, on peut soumettre la masse gélifiée à d'autres traitements. Ainsi, lorsque le solvant intervenant consiste en une solution aqueuse d'au moins une base forte alcaline, ladite dernière étape comprend avantageusement l'immersion de la masse pâteuse gélifiée dans de l'eau, à une température comprise entre + 40°C et + 100°C pendant une durée de 5 minutes à 8 heures suivie de son immersion dans un acide avantageusement fort, comme précisé ci-dessus. Plus généralement, ladite immersion dans un acide avantageusement fort peut être précédée de l'une et/ou l'autre des étapes ci-après :
- élévation de la température de la masse pâteuse gélifiée, sans contact direct avec un fluide caloporteur: par exemple, par étuvage, par micro-ondes, par haute fréquence, par infrarouges, par effet Joule direct dans la masse. Cette élévation de la température peut avoir pour but soit de faire précipiter la cellulose dissoute, soit de faire fondre l'(les) agent(s) porophore(s) afin de créer la porosité. S'il s'agit de faire précipiter la cellulose, la température doit être portée à plus de 60°C, préférentiellement plus de 70°C. S'il s'agit de faire fondre l'(les) agent(s) porophore(s), la température doit être portée au-dessus du point de fusion de celui-ci. Bien entendu, en fonction du(des) agent(s) porophore(s) employé(s), il est possible de provoquer simultanément la précipitation de la cellulose et la fusion du(des) agent(s) porophore(s). La durée d'un tel traitement par élévation de la température dépend du but recherché et des autres étapes du traitement final. Elle peut varier entre 5 minutes et 12 heures;
- traitement à l'eau froide ou chaude : la pâte gélifiée peut être traitée à l'eau par immersion ou aspersion. Ce traitement peut avoir pour but soit de faire précipiter la cellulose par lavage du solvant , soit de dissoudre l'(les) agent(s) porophore(s) afin de créer la porosité (soit les deux). Ces deux effets peuvent être combinés avec un effet thermique analogue à celui décrit au paragraphe précédent dans le cas où on utilise de l'eau chaude. La température et la durée de traitement sont adaptées à la formulation de la pâte et à l'effet recherché;
- traitement par une solution aqueuse saline ou faiblement basique : la pâte gélifiée peut être traitée par une solution aqueuse saline ou faiblement basique.
   On entend par solution aqueuse saline une solution aqueuse d'un sel soluble, par exemple un sel métallique du type Li, Na, K, Mg, Ca, Al, Mn, Fe, Co, Ni, Cu, Sn . Le contre-ion peut être choisi parmi Cl⁻, Br⁻, F⁻, I⁻, SO₄²⁻, NO₃⁻, CO₃⁻, CH₃COO⁻, PO₄³⁻, etc...
   On entend par solution aqueuse faiblement basique, une solution aqueuse basique équivalente à une solution aqueuse de soude de concentration inférieure à 2 % en masse.
   Le traitement par une solution aqueuse saline ou faiblement basique peut avoir pour but(s), comme le traitement à l'eau, de faire précipiter la cellulose dissoute par lavage du solvant ou/et de dissoudre ou de faire fondre l'(les) agent(s) porophore(s) afin de créer la porosité. Ces effets peuvent être combinés avec un effet thermique dans le cas où cette solution aqueuse est chaude. L'effet d'un tel traitement est également renforcée par la présence d'espèces ioniques en solution qui peuvent provoquer le "salting out" de la cellulose dissoute. Ce mode de traitement par une solution aqueuse saline ou faiblement basique est particulièrement adapté à un procédé industriel car il peut permettre le recyclage du sel et de la soude qui sont récupérés dans le bain. La température et la durée de traitement sont adaptés à la formulation de la pâte et à l'effet recherché;
- extraction de l'eau par évaporation ou lyophilisation : la pâte gélifiée peut être traitée dans des conditions permettant l'élimination de l'eau par évaporation ou par sublimation. Dans ce cas, on travaille de préférence sous pression réduite afin d'abaisser la température et d'éviter une dépolymérisation rapide de la cellulose. En particulier, pour réaliser la sublimation de l'eau, on travaille à une température inférieure à -8°C et à une pression inférieure à 6 mbar (6.10² Pa). L'extraction de l'eau a pour but de faire précipiter la cellulose par élimination du solvant. L'extraction de l'eau peut simultanément contribuer à créer la porosité : d'une part, le départ de l'eau laisse une microporosité au sein de la phase cellulosique; d'autre part, si de la glace ou un solide susceptible de se sublimer dans des conditions analogues intervient à titre d'agent porophore, l'extraction de l'eau créé la macroporosité. Si ce traitement est pratiqué, les conditions permettant l'extraction de l'eau sont généralement maintenues jusqu'à extraction complète.

Ladite dernière étape du procédé de l'invention peut, dans certains contextes, être simplifiée à l'extrême. Ainsi, notamment lorsque le solvant consiste en une solution aqueuse d'au moins une base forte alcaline (avantageusement une solution aqueuse de soude) et l'agent porophore, unique ou principal, en du sel de Glauber (Na₂SO₄, 10H₂O), ladite dernière étape peut consister en un simple rinçage à l'eau. Ledit rinçage est avantageusement mis en oeuvre, dans un premier temps, avec de l'eau chaude (par exemple, dans un bain à 90°C, pendant 1 heure) puis, dans un second temps, avec de l'eau froide (par exemple, dans au moins un bain, à la température ambiante).

Quelle qu'en soit la variante de réalisation, cette étape du procédé de l'invention doit conduire à la précipitation d'une masse poreuse; les pores résultant de la fusion, sublimation, dissolution ou décomposition chimique des agents porophores présents.

A l'issue de cette étape, le matériau alvéolaire cellulosique est élaboré.

Il est généralement nécessaire de le laver, afin notamment d'éliminer toute trace des agents chimiques utilisés en amont du procédé. Ce lavage est par ailleurs opportun dans la mesure où il peut permettre de récupérer de tels agents et de les recycler.

Ledit lavage peut être réalisé à l'eau, préférentiellement à l'eau chaude par immersion ou aspersion pendant la durée requise pour atteindre le taux d'épuration désiré.

Les matériaux alvéolaires cellulosiques préparés selon le procédé de l'invention sont constitués à 100 % de cellulose, à moins que :
- l'on ait introduit dans leur structure des fibres synthétiques de renfort;
ou
- il demeure, dans leur structure, retenus physiquement et/ou chimiquement, des additifs destinés à leur conférer des propriétés particulières.

Une partie, au moins, de la cellulose constituant lesdits matériaux possède une structure cristalline différente de la cellulose I.

De façon caractéristique, certains matériaux de l'invention ne renferme que de la cellulose dont la structure cristalline est de type cellulose II, dans la mesure où ils ont été obtenus sans intervention de fibres de renfort ou dans la mesure où les fibres de renfort ajoutées ont eu leur cellulose de type cellulose I convertie, par le solvant intervenant, en cellulose de type cellulose II.

Les matériaux alvéolaires cellulosiques et notamment les éponges, préparés par le procédé de l'invention se caractérisent par:
- leur densité,
- leur capacité d'absorption de liquides (d'eau),
- leur mouillabilité à l'état sec,
- leur structure poreuse,
- leur résistance à la rupture.
   Nous précisons ci-après les méthodes de mesure de ces différentes caractéristiques et les valeurs obtenues avec des éponges fabriquées selon le procédé de l'invention.
- La densité

On détermine le volume, à l'état humide, d'une éprouvette d'éponge. On sèche cette éprouvette en étuve jusqu'à obtenir une masse constante. La densité de l'éponge est la masse de l'éprouvette à l'état sec rapportée à son volume à l'état humide.

Les éponges cellulosiques obtenues par le procédé de l'invention présentent une densité comprise entre 20 et 100 kg/m³.
- La capacité d'absorption d'eau
   On immerge une éponge dans l'eau. On la laisse pendant 5 minutes puis on la pèse. On rapporte la masse obtenue à la masse de la même éponge à l'état sec.
   Les éponges cellulosiques obtenues par le procédé de l'invention présentent une capacité d'absorption d'eau supérieure à 10 fois leur masse sèche.
- La mouillabilité à l'état sec
   On sèche une éponge à l'étuve jusqu'à obtenir une masse constante. On pose l'éponge sèche à la surface de l'eau et on chronomètre le temps nécessaire pour qu'elle soit complètement mouillée.
   Les éponges cellulosiques obtenues par le procédé de l'invention présentent une mouillabilité à l'état sec inférieure à 60 secondes.
- La structure poreuse
   Elle est visualisée sur les photographies au microscope électronique à balayage annexées, en tant que figures, à la présente description.
- La résistance à la rupture

On découpe une éprouvettc d'éponge humide de section 20 x 50 mm (soit 10 cm²). On mesure la résistance à la rupture à l'aide d'un dynamomètre. Les éponges cellulosique obtenues par le procédé de l'invention présentent une résistance à la rupture supérieure à 0,3 daN/cm². Dans le cadre de la mise en oeuvre de variantes avantageuses du procédé de l'invention, on a obtenu des éponges cellulosiques qui présentent des résistances à la rupture nettement supérieures (de l'ordre de 1 daN/cm²).

A la considération des données ci-dessus, l'homme du métier comprend que la Demanderesse propose présentement un procédé performant, qui constitue une réelle alternative au procédé viscose.

Le procédé de l'invention permet d'obtenir, de façon industrielle, des produits alvéolaires cellulosiques qui présentent des propriétés, notamment d'hydrophilie et d'absorption de liquide, tout-à-fait similaires à celles des produits alvéolaires cellulosique de l'art antérieur, obtenus par le procédé viscose.

Lesdits produits alvéolaires cellulosiques obtenus par le procédé de l'invention sont per se nouveaux. Constituent donc le second objet de la présente invention les produits alvéolaires cellulosiques susceptibles d'être obtenus par ledit procédé. Parmi lesdits produits - nouveaux - sont particulièrement originaux ceux dont toute la cellulose présente une structure cristalline de type cellulose II (voir plus haut).

La présente invention est illustrée par les figures annexées et l'exemple ci-après.

Lesdites figures sont des photographies (à différents grossissements) au microscope électronique à balayage de la structure poreuse d'une éponge préparée par le procédé de l'invention, selon la variante de l'exemple ci-après.

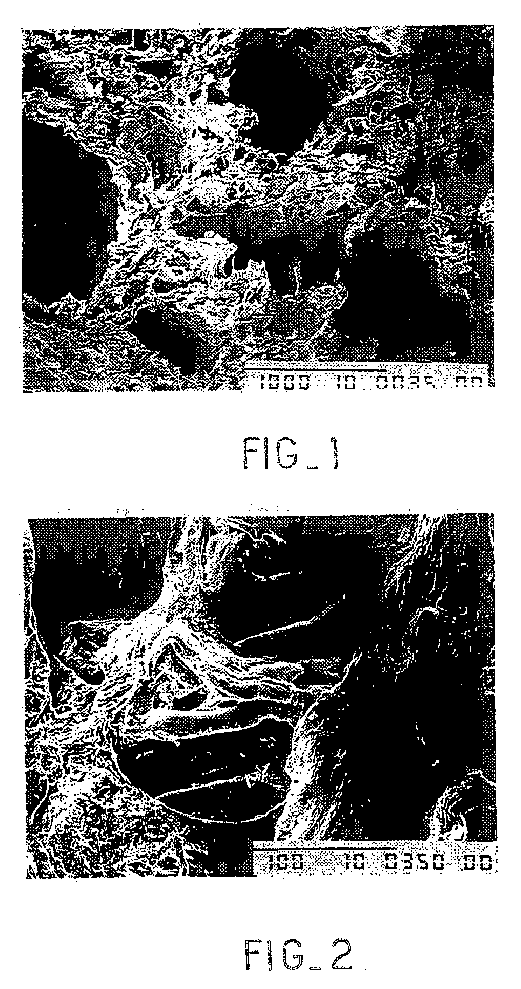

Sur la figure 1, le grossissement est x 35,

sur la figure 2, le grossissement est x 350,

sur la figure 3, le grossissement est x 2 000.

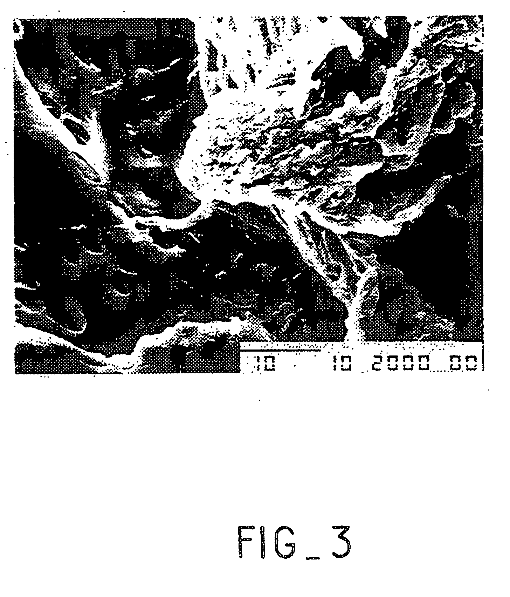

On observe sur ces trois figures, et notamment sur la figure 3, la présence de la macro-et de la microporosité.

### Exemple

La matière première cellulosique employée est une pâte de bois à dissoudre obtenue par le procédé Kraft, commercialisée par International Paper sous la dénomination Viscokraft HV. Cette pâte de bois possède un degré de polymérisation, mesuré par la viscosité d'une solution dans la cupriéthylènediamine, de 854.

Cette pâte de bois subit un traitement d'activation par explosion à la vapeur dans les conditions suivantes:
- imprégnation par de l'eau distillée pendant 12 heures,
- mise sous pression en présence de vapeur d'eau à 228°C sous 28 bars (28.10⁵ Pa) pendant 120 secondes,
- détente brutale par mise à l'air.

Après ce traitement d'activation, la pâte de bois présente un degré de polymérisation de 422.

Le solvant employé dans cet exemple est une solution aqueuse de soude contenant 8 % en masse de soude pure.

On prépare une solution de cellulose dans ladite solution aqueuse de soude de la manière suivante:
- on met en oeuvre 5 % en masse de cellulose sèche par rapport à la masse de solution aqueuse de soude à 8 %;
- la pâte de bois, utilisée à l'état humide, est broyée grossièrement;
- on prépare une solution aqueuse de soude, en tenant compte de l'humidité de la pâte de bois, de telle sorte que la concentration en soude pure après mélange avec la pâte de bois soit égale à 8 %;
- on refroidit la solution aqueuse de soude à -5°C;
- on mélange la solution aqueuse de soude avec la pâte de bois. Le mélange est agité vigoureusement pendant 4 heures. La température du mélange est maintenue à - 5°C pendant toute la durée de l'agitation.

La solution cellulosique obtenue comporte une partie de cellulose dissoute et une partie de cellulose non dissoute. Il s'agit, en fait, d'une suspension. Le taux de solubilité s'élève à 70 %.

On ajoute alors à ladite suspension des fibres de renfort : on utilise à cet effet des linters de coton de 1 à 2 mm de longueur. On incorpore 2 % en masse de ces fibres de renfort par rapport à la masse totale de la suspension cellulosique. Cette incorporation est réalisée par malaxage. La température de la solution cellulosique ainsi chargée (de la pâte de bois non dissoute et des fibres de renfort) est maintenue à environ 0°C au cours du malaxage. Ladite solution cellulosique chargée est alors laissée 1 heure 30 minutes au repos.

On mélange ensuite ladite suspension cellulosique comportant lesdites fibres de renfort avec une formulation d'agents porophores.

Ladite formulation d'agents porophores comporte les deux ingrédients ci-après :
- le porophore principal est le sulfate de sodium décahydraté Na₂SO₄, 10H₂O. Il est employé sous forme cristallisée. Les cristaux utilisés présentent une distribution de diamètres compris entre 100 µm et 3 mm. On met en oeuvre 250 % en masse de sulfate de sodium décahydraté par rapport à la masse de solution cellulosique chargée;
- le laurylsulfate de sodium est employé pour provoquer un léger gonflement de la solution cellulosique et pour régler la taille de la microporosité. On utilise 0,5 % en masse de Neopon® par rapport à la masse de solution cellulosique chargée.

Ladite formulation d'agents porophores est mélangée à la suspension cellulosique chargée des fibres de renfort par malaxage, jusqu'à obtenir une pâte homogène. La température au cours de ce malaxage est maintenue en dessous de 10°C.

La pâte pour éponges ainsi obtenue est versée dans un moule de forme parallélépipédique de 10 à 15 cm de côté. Elle est ensuite lentement refroidie à une température de - 20°C, maintenue à cette température pendant 24 heures puis ramenée à température ambiante sous la forme du gel attendu.

A l'issue de cette étape de gélification, la pâte constitue un gel solide présentant une bonne cohésion qui peut être démoulé sans se déformer.

On provoque enfin la précipitation de la cellulose dissoute et la fusion du sulfate de sodium par un traitement dans deux bains successifs:
- eau chaude à 90°C pendant 1 heure;
- eau froide (∼ 20°C) pendant 8 heures.

L'éponge obtenue présente un aspect très proche de l'éponge-viscose:
présence d'une croûte en surface; porosité nettement visible et bien formée. Ses dimensions sont légèrement inférieures aux dimensions du moule. Elle est souple et élastique à l'état humide . Elle se rétrécit et devient dure en séchant. Elle se remouille quasiment instantanément lorsqu'elle est sèche.

Elle possède les caractéristiques suivantes:
- densité (à l'état humide) : 35 kg/m³ (35 g/dm³)
- absorption d'eau: 17 fois son propre poids
- résistance à la rupture : 0,6 daN/cm².

## Revendications

1. Procédé de fabrication d'éponges ou toiles-éponges, produits alvéolaires cellulosiques tridimensionnels dont la structure cellulosique présente à la fois une macro- et une microporosité, *i*.*e*. des pores dont la taille est supérieure à 100 µm et des pores dont la taille est inférieure à 10 µm, **caractérisé en ce qu'**il comprend :
- la dissolution au moins partielle de cellulose dans un solvant intrinsèque de la cellulose;
- l'incorporation, avec agitation, dans le mélange résultant, d'une quantité efficace d'au moins un agent porophore, compatible avec ledit mélange, convenant pour générer, lorsqu'il développe son action, ladite macroporosité et d'une quantité efficace d'au moins un autre agent porophore, compatible lui aussi avec ledit mélange, convenant lui pour générer, lorsqu'il développe son action, ladite microporosité ;
- la gélification de la masse pâteuse homogène ainsi obtenue;
- le traitement de ladite masse gélifiée dans des conditions où la cellulose dissoute précipite et l'action des agents porophores présents se développe.

2. Procédé selon la revendication 1 **caractérisé en ce que** ladite cellulose est une cellulose dont la structure cristalline est de type cellulose I et/ou cellulose II, et dont le degré de polymérisation viscosimètrique moyen est supérieur à 100.

3. Procédé selon l'une quelconque des revendications 1 ou 2, **caractérisé en ce que** ladite cellulose se présente sous forme de pâte de bois, de papier recyclé, de linters de coton, de fibres cellulosiques, de cellulose de déchets végétaux, de cellulose transformée ou d'articles en cellulose régénérée.

4. Procédé selon l'une quelconque des revendications 1 à 3, **caractérisé en ce qu'**il comprend, préalablement à ladite dissolution au moins partielle de ladite cellulose, un traitement d'activation de celle-ci.

5. Procédé selon l'une quelconque des revendications 1 à 4, **caractérisé en ce que**, en vue d'obtenir ladite dissolution au moins partielle de ladite cellulose dans ledit solvant intrinsèque de la cellulose, on ajoute, dans ledit solvant, de 3 à 15 % en masse de ladite cellulose.

6. Procédé selon l'une quelconque des revendications 1 à 5, **caractérisé en ce que** ladite cellulose est dissoute, au moins partiellement, dans une solution aqueuse d'au moins une base forte alcaline.

7. Procédé selon la revendication 6, **caractérisé en ce que** la dissolution est mise en oeuvre à une température comprise entre - 15 °C et + 10°C, dans une solution renfermant de 5 à 12 % en masse de ladite (desdites) base(s) forte(s).

8. Procédé selon l'une des revendications 6 ou 7, **caractérisé en ce qu'**il est mis en oeuvre dans une solution aqueuse de soude.

9. Procédé selon l'une quelconque des revendications 1 à 8, **caractérisé en ce qu'**il comprend l'incorporation, à titre d'agent porophore, d'au moins un solide, sous la forme de particules d'une granulométrie comprise entre 10 µm et 50 mm ; solide actif par fusion, sublimation, dissolution ou décomposition chimique.

10. Procédé selon l'une quelconque des revendications 1 à 9, **caractérisé en ce qu'**il comprend l'incorporation, à titre d'agent porophore, d'au moins un composé choisi parmi :
- les solides, solubles dans le mélange cellulosique ou insolubles dans celui-ci et présentant alors une granulométrie inférieure à 100 µm, et les liquides, susceptibles de libérer un gaz au cours des étapes ultérieures du procédé, sous l'effet d'une élévation de température ou sous l'action d'un agent chimique;
- les polyélectrolytes anioniques ou cationiques, susceptibles de provoquer une démixtion du mélange cellulosique dès leur incorporation ou au cours d'étapes ultérieures du procédé, sous l'effet de variations de la température;
- les agents de gonflements susceptibles de provoquer un léger moussage du mélange cellulosique.

11. Procédé selon l'une quelconque des revendications 1 à 10, **caractérisé en ce qu'**il comprend l'incorporation, dans le mélange cellulose/solvant et/ou dans la masse pâteuse cellulose/solvant/agents porophores, de fibres de renfort et/ou d'additifs.

12. Procédé selon l'une quelconque des revendications 6 à 11, **caractérisé en ce que** la masse pâteuse homogène est gélifiée à une température comprise entre - 30°C et + 90°C pendant une durée de 1 heure à 400 heures.

13. Procédé selon l'une quelconque des revendications 6 à 12, **caractérisé en ce que** le traitement de la masse gélifiée comprend l'immersion de celle-ci dans une solution acide ou son rinçage à l'eau.

14. Procédé selon l'une quelconque des revendications 1 à 13, **caractérisé en ce qu'**il comprend :
- la dissolution au moins partielle, dans une solution aqueuse renfermant de 7 à 10 % en masse de soude, de 3 à 15 % en masse de ladite cellulose ;
- l'addition, à la solution ou suspension obtenue, de fibres de renfort ;
- l'incorporation, avec agitation, dans le mélange résultant, d'une quantité efficace de sel de Glauber et d'au moins un autre agent porophore choisi parmi les composés listés à la revendication 10 ;
- la gélification de la masse pâteuse homogène ainsi obtenue par abaissement de sa température à une température inférieure à -8°C ;
- le traitement de ladite masse gélifiée par rinçage à l'eau.

## Patentansprüche

1. Verfahren zur Herstellung von Schwämmen oder Schwammtüchern, dreidimensionalen geschäumten Celluloseprodukten, deren Cellulosestruktur sowohl eine Makroporosität als auch eine Mikroporosität, d.h. Poren mit einer Größe von > 100 µm und Poren mit einer Größe von < 10 µm, aufweist, **dadurch gekennzeichnet, dass** es umfasst:
- die mindestens partielle Auflösung von Cellulose in einem echten Lösungsmittel für Cellulose;
- die Einarbeitung, unter Rühren in die resultierende Mischung, einer wirksamen Menge mindestens eines mit der Mischung kompatiblen Treibmittels, das geeignet ist, die genannte Makroporosität zu erzeugen, wenn es seine Wirkung entfaltet, sowie einer wirksamen Menge mindestens eines weiteren Treibmittels, das ebenfalls mit der Mischung kompatibel und geeignet ist, die genannte Mikroporosität zu erzeugen, wenn es seine Wirkung entfaltet;
- die Gelierung der auf diese Weise erhaltenen homogenen pastösen Masse; und
- die Behandlung der gelierten Masse unter Bedingungen, unter denen die gelöste Cellulose ausfällt und die Wirkung der vorhandenen Treibmittel sich entfaltet.

2. Verfahren nach Anspruch 1, **dadurch gekennzeichnet, dass** die Cellulose eine Cellulose ist, deren Kristallstruktur eine solche vom Cellulose-Typ I und/oder vom Cellulose-Typ II ist, deren mittlerer Viscosimeter-Polymerisationsgrad mehr als 100 beträgt.

3. Verfahren nach einem der Ansprüche 1 oder 2, **dadurch gekennzeichnet, dass** die Cellulose in Form von Zellstoff, Recycle-Papier, Baumwolllinters, Cellulosefasern, pflanzlichen Celluloseabfällen, umgewandelter Cellulose oder Gegenständen aus regenerierter Cellulose vorliegt.

4. Verfahren nach einem der Ansprüche 1 bis 3, **dadurch gekennzeichnet, dass** es vor der mindestens partiellen Auflösung der Cellulose eine Behandlung zur Aktivierung derselben umfasst.

5. Verfahren nach einem der Ansprüche 1 bis 4, **dadurch gekennzeichnet, dass** zur Erzielung der mindestens partiellen Auflösung der Cellulose in dem echten Lösungsmittel für Cellulose dem Lösungsmittel 3 bis 15 Massenprozent Cellulose zugesetzt werden.

6. Verfahren nach einem der Ansprüche 1 bis 5, **dadurch gekennzeichnet, dass** die Cellulose mindestens teilweise in einer wässrigen Lösung mindestens einer starken alkalischen Base gelöst wird.

7. Verfahren nach Anspruch 6, **dadurch gekennzeichnet, dass** die Auflösung bei einer Temperatur zwischen -15 und +10 °C in einer Lösung durchgeführt wird, die 5 bis 12 Massenprozent der genannten starken Base(n) enthält.

8. Verfahren nach einem der Ansprüche 6 oder 7, **dadurch gekennzeichnet, dass** es in einer wässrigen Natriumhydroxidlösung durchgeführt wird.

9. Verfahren nach einem der Ansprüche 1 bis 8, **dadurch gekennzeichnet, dass** es umfasst die Einarbeitung mindestens eines Feststoffs in Form von Teilchen mit einer Teilchengröße zwischen 10 µm und 50 mm als aktives festes Treibmittel durch Schmelzen, Sublimation, Auflösung oder chemische Zersetzung.

10. Verfahren nach einem der Ansprüche 1 bis 9, **dadurch gekennzeichnet, dass** es die Einarbeitung mindestens einer Verbindung als Treibmittel umfasst, die ausgewählt wird unter:
- den in der Cellulosemischung löslichen oder unlöslichen Feststoffen, die eine Teilchengröße von weniger als 100 µm aufweisen, und den Flüssigkeiten, die während des Verlaufs der späteren Stufen des Verfahrens unter der Einwirkung einer erhöhten Temperatur und unter der Einwirkung eines chemischen Agens ein Gas freisetzen können;
- den anionischen oder kationischen Polyelektrolyten, die bei ihrer Einarbeitung oder im Verlaufe der späteren Stufen des Verfahrens unter dem Einfluss von Temperaturschwankungen eine Entmischung hervorrufen können; und
- den Treibmitteln, die ein schwaches Schäumen der Cellulosemischung hervorrufen können.

11. Verfahren nach einem der Ansprüche 1 bis 10, **dadurch gekennzeichnet, dass** es umfasst die Einarbeitung von Verstärkungsfasern und/oder Zusätzen in die Cellulose/Lösungsmittel-Mischung und/oder in die pastöse Cellulose/Lösungsmittel/Treibmittel-Masse.

12. Verfahren nach einem der Ansprüche 6 bis 11, **dadurch gekennzeichnet, dass** die homogene pastöse Masse für eine Zeitspanne von 1 bis 400 h bei einer Temperatur zwischen -30 und +90 °C geliert wird.

13. Verfahren nach einem der Ansprüche 6 bis 12, **dadurch gekennzeichnet, dass** die Behandlung der gelierten Masse das Eintauchen derselben in eine saure Lösung oder ihr Spülen mit Wasser umfasst.

14. Verfahren nach einem der Ansprüche 1 bis 13, **dadurch gekennzeichnet, dass** es umfasst
- die mindestens partielle Auflösung von 3 bis 15 Massenprozent der Cellulose in einer wässrigen Lösung, die 7 bis 10 Massenprozent Natriumhydroxid enthält;
- die Zugabe von Verstärkungsfasern zu der erhaltenen Lösung oder Suspension;
- die Einarbeitung einer wirksamen Menge Glaubersalz und mindestens eines weiteren Treibmittels, ausgewählt unter den im Anspruch 10 aufgezählten Verbindungen, unter Rühren in die resultierende Mischung;
- die Gelierung der so erhaltenen homogenen pastösen Masse durch Absenkung ihrer Temperatur auf eine Temperatur von unterhalb -8 °C; und
- die Behandlung der gelierten Masse durch Spülen mit Wasser.

## Claims

1. A process for producing sponges or sponge-clothes, three-dimensional alveolar cellulosic products, the cellulosic structure of which shows both a macro- and microporosity, i.e. pores with a size of over 100 µm and pores with a size below 10 µm, **characterized in that** it comprises:
- at least partially dissolving cellulose in an intrinsic solvent for cellulose;
- incorporating, with stirring, in the resulting mixture, an effective amount of at least one pore-forming agent which is compatible with said mixture and capable of generating the said macroporosity when it is actuated as well as an effective amount of at least one other pore-forming agent which is also compatible with said mixture and itself capable of generating the said microporosity when it is actuated;
- gelling the homogeneous dough thus obtained;
- treating said gelled dough under conditions in which the dissolved cellulose precipitates out and the pore-forming agents present are actuated.

2. The process according to claim 1, **characterized in that** said cellulose is a cellulose with a type I cellulose and/or type II cellulose crystalline structure and of which the average viscometric degree of polymerization is over 100.

3. The process according to claim 1 or 2, **characterized in that** said cellulose is wood pulp, recycled paper, cotton linters, cellulosic fibers, cellulose from plant waste, transformed cellulose or regenerated cellulose articles.

4. The process according to any one of claims 1 to 3, **characterized in that** it comprises an activation treatment for said cellulose carried out prior to said at least partial dissolution of said cellulose.

5. The process according to any one of claims 1 to 4, **characterized in that** 3 to 15% by weight of said cellulose is added to said solvent in order to obtain said at least partial dissolution of said cellulose in said intrinsic solvent for cellulose.

6. The process according to any one of claims 1 to 5, **characterized in that** said cellulose is at least partially dissolved in an aqueous solution of at least one strong alkaline base.

7. The process according to claim 6, **characterized in that** said dissolution is carried out at a temperature in the range -15°C to +10°C, in a solution comprising 5 to 12% by weight of said strong base(s).

8. The process according to claim 6 or 7, **characterized in that** said dissolution is carried out in an aqueous sodium hydroxide solution.

9. The process according to any one of claims 1 to 8, **characterized in that** it comprises incorporating, as a pore-forming agent, at least one solid in the form of particles with a granulometry in the range 10 µm to 50 mm; the solid being actuated by fusion, sublimation, dissolution or chemical decomposition.

10. The process according to any one of claims 1 to 9, **characterized in that** it comprises incorporating, as a pore-forming agent, at least one compound selected from:
• solids which are soluble in the cellulosic mixture or insoluble therein and thus have a granulometry of less than 100 µm, and liquids which can liberate a gas during the subsequent steps of the process by a rise in temperature or by the action of a chemical agent;
• anionic or cationic polyelectrolytes which can cause segregation of the cellulosic mixture from their incorporation or during the subsequent steps of the process, by variations in temperature;
• swelling agents which can cause slight foaming of the cellulosic mixture.

11. The process according to any one of claim 1 to 10, **characterized in that** it comprises incorporating reinforcing fibers and/or additives into the cellulose/solvent mixture and/or into the cellulose/solvent/pore-forming agents dough.

12. The process according to any one of claims 6 to 11, **characterized in that** the homogeneous dough is gelled at a temperature in the range -30°C to +90°C for a period of one hour to 400 hours.

13. The process according to any one of claims 6 to 12, **characterized in that** the treatment of the gelled mass comprises immersing said mass in an acid solution or rinsing said mass with water.

14. The process according to any one of claims 1 to 13, **characterized in that** it comprises:
- at least partially dissolving 3 to 15% by weight of cellulose in an aqueous solution comprising 7 to 10% by weight of sodium hydroxide;
- adding reinforcing fibers to the obtained solution or suspension;
- incorporating, with stirring, an effective amount of Glauber salt and of at least one other pore-forming agent selected from the compounds listed in claim 10 in the resulting mixture ;
- gelling the homogeneous dough thus obtained by lowering its temperature to a temperature inferior to -8°C;
- treating said gelled dough by rinsing it with water.
